# EUROPEAN PATENT APPLICATION

(11) **EP 1 750 222 A1**
(43) Date of publication of application: **07.02.2007**
(21) Application number: 06113580.2
(22) Date of filing: 05.05.2006
(51) Int. Cl.: G06Q 10/00

(54) **Process instance serialization**

(30) Priority: 11.07.2005 EP 05106287
(71) Applicant: International Business Machines Corporation, Armonk, NY 10504 (US)
(72) Inventor: Leymann, Frank Professor Dr., Aidlingen 2, 71134 (DE); Roller, Dieter, Schönaich, 71101 (DE)
(74) Representative: Duscher, Reinhard

(57) **Abstract**

The present invention relates to a workflow management system (WFMS) in a networked computer environment which implements the execution of multiple instances of business processes, and wherein a single process instance is enabled to invoke web services which may perform an update process of datasets (18) of different storages (14-1, 14-1) holding redundant information. In particular it relates to a method and system for serializing the access to such dataset accesses.
Business Process Execution Language for Web Services (BPEL4WS) allows defining both, business processes that make use of Web services, and business processes that externalize their functionality as Web services. As the business process has no knowledge about the data that is accessed by the invoked Web services it is possible that different process instances that are carried out concurrently update of the same pieces of information within a database. Unless the access to the data is carried out as a transaction, it is quite possible that the parallel execution of the process instances causes inconsistencies in the data. Those anomalies can be avoided by serializing the execution of process instances based on the correlation information associated with the messages consumed by the process instances.

## Description

### 1. BACKGROUND OF THE INVENTION

### 1.1. FIELD OF THE INVENTION

The present invention relates to a Workflow Management System or a computer system with comparable functionality (WFMS). More particularly the invention relates to a method or means for serializing the execution of business processes.

### 1.2. DESCRIPTION AND DISADVANTAGES OF PRIOR ART

Workflow Management Systems (WFMS) support the modeling and execution of business processes. Business processes executed within a WFMS environment specify which piece of work of a network of pieces of work is carried out in which sequence. The individual pieces of work might be distributed across a multitude of different computer systems connected by some type of network.

IBM WebSphere Business Process Choreographer represents such a typical modern, sophisticated, and powerful workflow management system. It supports the definition of business processes as a network of activities. The network, the process model, is constructed from a set of activities, which define the individual tasks that need to be carried out. Definition of the process graph is via a graphical editor, or a flow definition language, such as Business Process Execution Language for Web Services (BPEL4WS). In this language, the activities are described as Web Services, defined via the Web Services Definition Language (WSDL).

For performance reasons, different instances of the same business process model are carried out in parallel; if the execution of different instances would be serialized, this would severely limit the throughput of the system.
In general, the parallel execution of process instances does not create any problems. However there are situations where the parallel execution of a set of process instances could result in inconsistent information managed by the process instances themselves or by the Web services invoked by such process instance.

As the workflow management system carries out the individual business process instances invoke the Web Services without any knowledge what the invoked web services do, certain anomalies and inconsistencies in the data managed by the invoked Web Services may occur.

For example, it is possible that several parallel executed business process instances invoke the same set of Web Services with the same set of data. If the invoked set of Web services use the passed information to update databases, it is possible that the information stored in a database shared between these process instances or in a set of databases becomes inconsistent due to the possibly interleaved update actions of the different Web services.

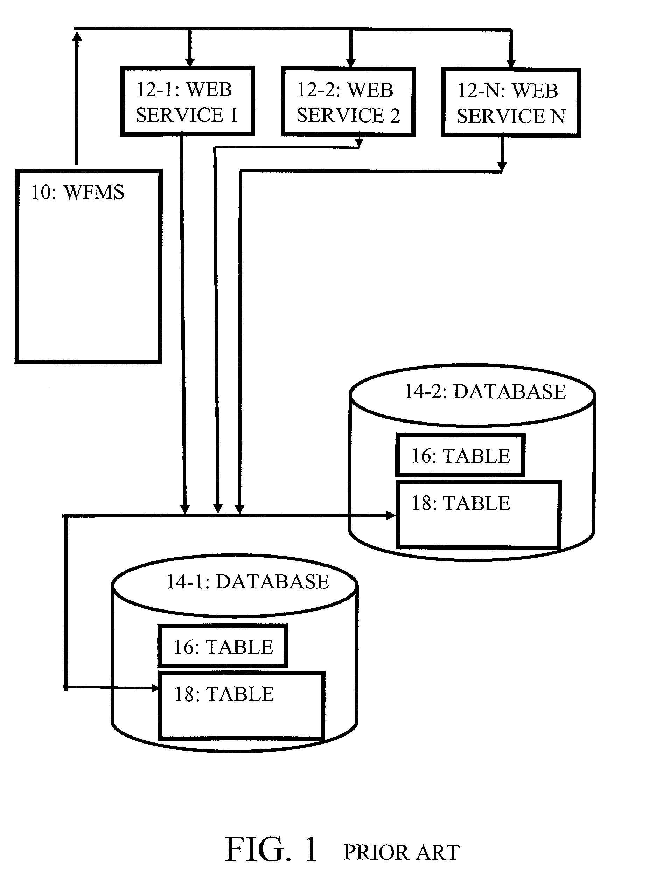

Figure 1 shows a prior art WFMS system 10 that invokes several Web Services 12 (1 to N) which access two different databases 14-1, 14-2, and respective tables 16 and 18. It should be noted that the usage of a database management system, in particular a relational database management, is for illustration purpose only; any other mechanism that provides for the storage, persistent or non-persistent, can be used. Those Web Services are defined as activities within an appropriate process model. When the WFMS carries out process instances of said process model, it navigates through the process graph, determines the appropriate activities and invokes the associated Web Service. As shown those Web Services update data in the shown databases; this is expressed symbolically by arrows pointing to said databases.

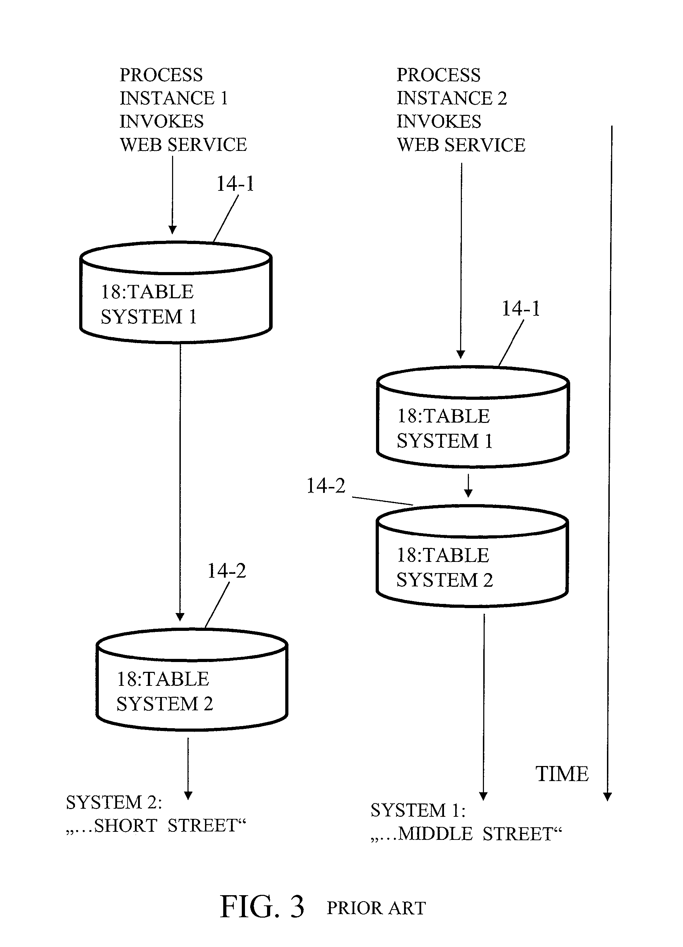

Figure 3 illustrates in a timeline from top to bottom a prior art method how two different process instances update two tables 18 comprising redundant information for a single customer person within respective two different database systems 14-1, 14-2 maintained according to prior art in an enterprise.

For example assume that two business process instances are carried out for the same customer number "1234" as the result of two requests for the update of the address of the same customer number 1234. Let us further assume that the first request creates process instance 1 to change the address to Short Street, Dallas and the second request creates process instance 2 to change the address to Middle Street, Dallas. In this case it is possible that the execution sequence of the different invoked Web services is the following: Process instance 1 invokes system 1, process instance 2 invokes system 1, process instance 2 invokes system 2, and process instance 1 invokes system 1. The net result is that the address of the customer with the customer number 1234 in system 1 is Middle Street, Dallas and in system 2 is Short Street, Dallas.

A straight forward approach to solve this data inconsistency problem might be to change the implementation of the workflow management system in such a way that all process instances for the process model are carried out sequentially. This option is certainly not a good option for any workflow management system that needs to sustain any decent load, as the performance of the WFMS is substantially decreased.

### 1.3. OBJECTIVES OF THE INVENTION

It is thus an objective of the present invention to provide a method according to the preamble of claim 1 or claim 2 and a respective system, for serializing the access to information which is stored redundantly in at least two datastores, which is improved in order to avoid inconsistencies in the two datastores, while at the same time keeping the degree of parallel execution of process instances quite high in general.

### 2. SUMMARY AND ADVANTAGES OF THE INVENTION

This objective of the invention is achieved by the features stated in enclosed independent claims. Further advantageous arrangements and embodiments of the invention are set forth in the respective subclaims. Reference should now be made to the appended claims.

According to the basic aspect of the present invention as noted in claim 1, it is proposed to serialize the datastore accesses performed by multiple concurrently executed process instances of the same process model only in the limited situations where variables (or parts of variables) have the same value in the concurrently executed process instances.

Serialization means that the workflow management system carries out one process instance after the other instead of concurrently.

The term "datastore" shall be understood to include any storage device and the associated access software and hardware, as the invention is totally independent from the type of storage in use. So, relational or hierarchical databases and filesystem-based storage structures are typical representatives thereof.

The term "variable" is hereby to be understood in the sense as it is commonly used in a programming language. Part of variable relates to parts of complex structures as for example the "struct" option in C-Programming language which allows a variable to have an inner, often hierarchical structure.

An appropriate definition for a variable part "customer number" in the "customer address" variable that is used for controlling serialization may look like the following code fragment.
<process name="updateAddresses"
serializedByVar="customerAddress\customerNumber">

The "serializedByVar" attribute indicates that concurrently executing process instances of the appropriate process model that have the same value in the variable or part of the variable specified by the attribute are to be serialized. If for example, two concurrently executing process instances of the "updateAddresses" process model have the value of "1234" in the customerNumber part of the customerAddress variable, then the workflow management system serializes the execution of those concurrently executing process instances. Furthermore, the specification of variables that causes serialization is not limited to a single variable, but can be a set of variables; that means one could specify several variables in the "serializedByVar" attribute. Furthermore, different options may be defined, such as conditional comparison of the set members for taking the decision, if or if not serialization should take place. Such a conditional comparison could be
serializedByVar = "customerTown OR customerNumber"
which indicates that two concurrently executing process instances are only serialized if they both have the same value for the customerNumber or the customerTown.

This basic inventional approach solves the problem stated above, as it limits the serialized execution of work only to occurrences of conflicting accesses to the same set of information managed in the different datastores. As this situation is typically rather limited, the impact of serialization is quite minimal.

In many cases, only parts of the process instances need to be serialized; that means the access to the redundant data is carried out only in small parts of the business process. BPEL4WS uses the notion of scopes for such parts to group a set of activities and to assign properties to the set of activities. If one just wants to serialize when the execution is within such a scope, then one would specify this as follows:
<scope
   serializedByVar="customerAddress\customerNumber">
   set of activities
</scope>

This has the additional advantage that serialization is limited to the time the scope is being carried out.

In an alternative approach the same effect of serializing the execution of concurrently executing process instances can be achieved by using fields within received messages instead of variables or parts of variables.

An appropriate definition for a part "customer number" in the "customer address" message that is used for controlling serialization may look like the following code fragment.
<process name="updateAddresses"
serializedByMsgVar="customerAddress\customerNumber">

The "serializedByMsgVar" attribute accepts the same specification as the "serializedByVar" attribute. If a message is received, and the value of the field or the values of set of fields specified with the attribute are identical to the value of the field or values of the set of fields of a message that is currently processed by a process instance, processing of the message is delayed until the currently executing process instance finishes.

Similarly, as for the specification of the "serializedByVar" attribute, specification of the "serializedByMsgVar" attribute is supported on the scope level.
As a further refinement, one could use, instead of specifying the fields in the input message, correlation sets associated with the input message.
Correlation sets define a set of fields in messages, which are used to identify a particular instance of some resource; a resource could be everything from a simple servlet that accesses a database to a full-fledged Web Service.

In particular, correlation sets in BPEL4WS provide a means to identify business process instances via fields in messages sent to the business process e.g. by a Web Service or emitted from the business process. According to the following embodiments this BPEL4WS option is exploited for serialization purposes.

For example, a business process may define the customer number as a correlation field. This requires the following definitions in the appropriate WSDL file:
<bpws:property name="customerNumber" type="xsd:integer/>
<bpws:propertyAlias name="customerNumber" messageType="customerAddressMessage" part="customerNumber"/>

This small code section defines a property to be used in correlation sets and where this property is located in a particular message. In the example, the property is the field customerNumber, which is located in the appropriate field in the appropriate message.

The properties are then used within the business process to define correlation sets as shown in the following code section that is added to a given business process definition:
<correlationSets>
   <correlationSet name="customerNumber">
   properties="customerNumber"/>
</correlationSets>

The initialization of a correlation set is specified together with a specific activity. In the example, the initial <receive> activity would need to be modified as shown in the following code section. The "initiate" attribute indicates that the correlation set is initialized when the activity is being carried out:
<receive name="updateSystems"
   partnerLink="requestor"
   portType="updateAddressPT"
   operation="request"
   variable="customerAddress">
<correlations>
   <correlation set="customerNumber"
   initiate="yes"/>
   </correlations>
</receive>

The following code section illustrates how correlation sets are used in this embodiment to serialize the execution of process instances:
<process name="updateAddresses"
   serializedByCorrelation="customerNumber">

So far the description how complete process instances may be serialized.
Similiarly to the previous example with scopes, in the given example it is fairly sufficient to serialize just parts of process instances. This can be done according to this embodiment by using "scopes" and associating the serialization specifications with the scope. A definition may look like the following:
<scope name="requests
   serializeByCorrelation="customerNumber">
<invoke name="updateSystem1"
   partnerLink="system1"
   portType="system1PT"
   operation="update"
   variable="customerAddress"/>
<invoke name="updateSystem2"
   partnerLink="system2"
   portType="system2PT"
   operation="update"
   variable="customerAddress"/>
</scope>

A useful application of the inventional method can be achieved in WFMSs, which invoke Web Services, as the inclusion thereof into a workflow is explicitly supported by BPEL4WS

Implementing the proposed changes in a prior art WFMS or in an application that includes a WFMS-like component may be done as a further functional add-In component. The workflow management system or the application program embedding a WFMS may for example maintain a table - herein denoted as "status table 50" - with at least one entry per process instance, wherein the necessary fields are stored. Each entry contains at least the values of the fields that are used for serializing the process instance or scope within a process instance and a process instance ID for identifying the appropriate process instance and a status field, which may take values like "available", "not available for others", "completed", "pending", "enqueued", etc., that describes the current state of the process instance, and possibly further attributes.

Processing depends whether message input variables/correlation sets or variables are used for serialization:

If message input variables, in particular if specified via correlation sets, are used and a new message arrives, the WFMS checks immediately whether a process instance with the same set of values is currently executing by looking up the status table. If such a process instance is currently being carried out, processing of the message is suspended until the currently running process instance has completed the appropriate processing. Completion of the processing may be either by leaving the scope if serialization is on scope level, or by finishing the process. After completion, the waiting message is processed.

If variables are used for serialization, the WFMS checks, after new values have been assigned to the serialization-relevant variables, whether those new values are the same as those of another running process instance. If so, navigation stops until the other process instance has finished processing, either by leaving the scope if scope level serialization is active, or after the process instance finishes. After processing has finished, navigation continues. One way of implementing the signalling of completion of the currently running process instance and continuation of navigation with the new process instance is by having the completing process instance updating the status table. An appropriate database trigger could then signal this change to the WFMS component that handles navigation or incoming message processing.

The present invention has particular advantages in web related environments wherein a process instance may invoke a web service in order to perform some predetermined task. This is because the request/ response scheme of web services include messages to be processed by the WFMS which come in quite asynchronously and unpredictable in time in relation to the order and time in which they were invoked from within the WFMS.

### 3. BRIEF DESCRIPTION OF THE DRAWINGS

The present invention is illustrated by way of example and is not limited by the shape of the figures of the drawings in which:
Figure 1 is a schematic block diagram representation of a prior art WFMS system view shown to be cooperating with web services;
Figure 2 is a representation according to figure 1, improved by a preferred embodiment of the present invention,
Figure 3 illustrates in a timeline from top to bottom how two different process instances update two datasets within respective two different datastores (1, 2) maintained according to prior art in an enterprise for a single person;
Figure 4 is a representation according to figure 3, improved by a preferred embodiment of the present invention adapted for cooperation between WFMS and web services,
Figure 5 is a block diagram showing parts of an inventional status table used for process instance serialization purposes;
Figure 6 is a control flow diagram illustrating the method according to a preferred embodiment of the invention.

### 4. DETAILED DESCRIPTION OF PREFERRED EMBODIMENTS

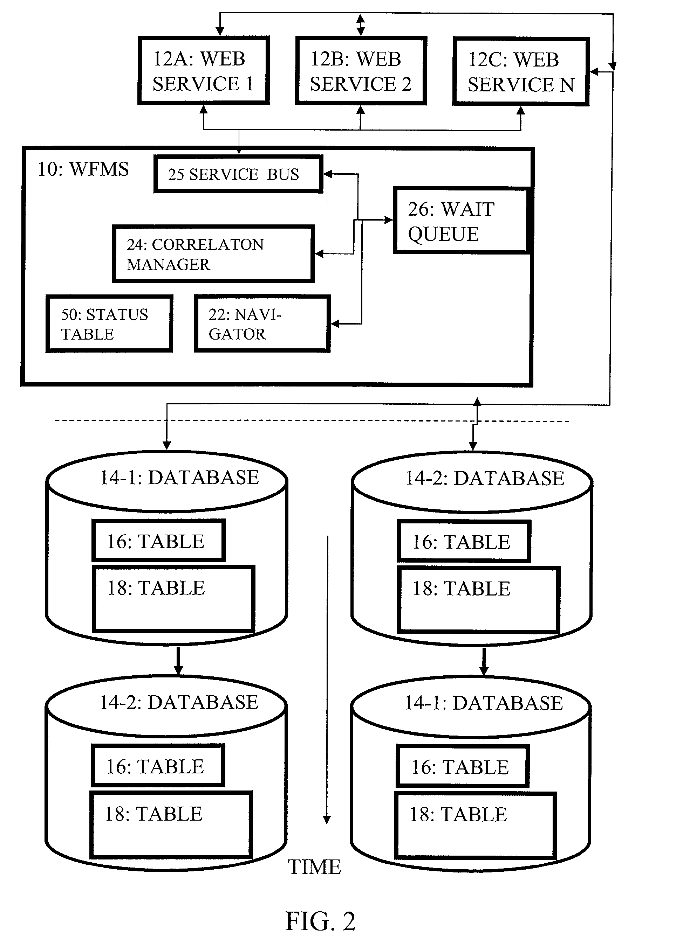

With general reference to the figures and with special reference now to figure 2 a preferred embodiment is described in more detail which includes the orchestration of Web Services according to the industry norm BPEL4WS.

It implements a workflow management system (WFMS) 10 having amongst others a correlation manager component 24 and the navigator component 22. The WFMS invokes Web Services and receives requests/results from Web Services through the service bus component 25. This component knows the mechanisms that are being used to interact with a Web Service. In particular the service bus knows when a request/result is coming in from a Web Service, to which process model the request/reply belongs to. After analyzing the request, it stores the request/reply with the process model information into the WFMS internal wait queue 26.

The correlation manager 24 reads the message from the queue and determines the process instance to which the message belongs. If a process instance can be found in the correlation manager's status table 50, it obtains the appropriate process instance identifications and inserts a new message with the message and the fetched process instance identifier into the queue to be used by the navigator 22. The navigator reads the message from the queue, fetches the current process instance information from the WFMS internal database, determines the point in the process graph where the message is to be processed and continues navigation through the process instance according to the definition of the underlying process model.

If the message is the start message of a process, and correlation is specified, the correlation manager creates a process instance, obtains correlation information and stores the information together with the process instance identifier in the status table. It further creates a process instance identifier. It then inserts a message with the original data plus the process instance identifier into the queue as a request to the navigator to start a new process instance.

If the message is the start message of a process and no correlation is defined, the correlation manager just generates a process instance identifier and generates the message without storing any information in the status table.

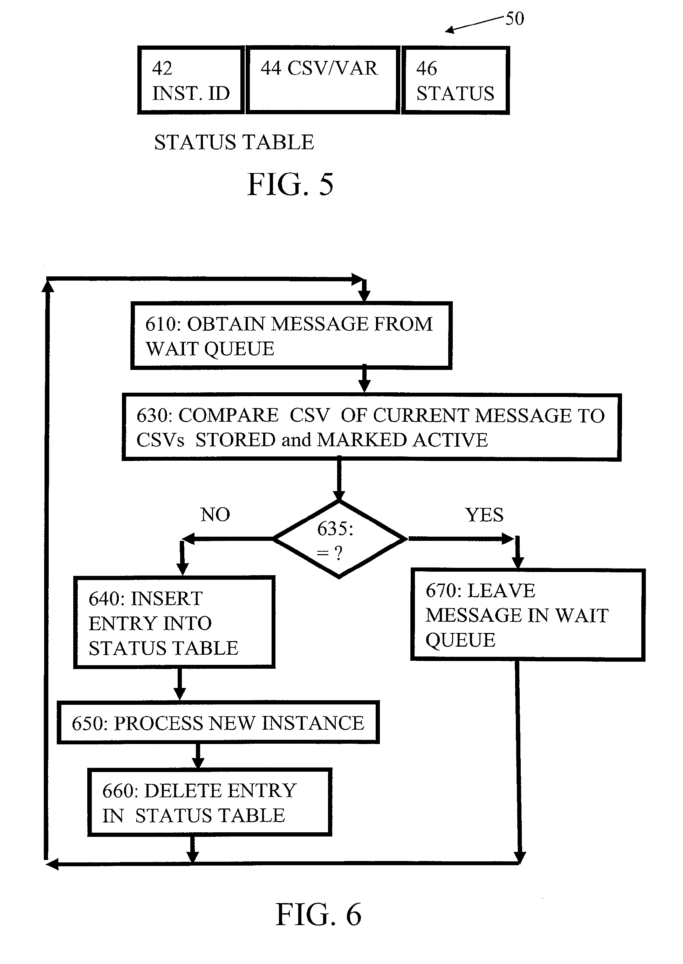

With additional reference to figure 5 the status table 50 currently maintained by the correlation manager is enriched by the status field 46. Thus, it comprises an ID field 42 for identifying the process instance, and a status field 46, which may take values like: active, successful completed, queued, deleted, stopped without completion, etc. and the values of the correlation sets or input message variable 44. Furthermore the same or similar table is is used by the navigation engine to determine if two concurrently executing process instance contain the same value in the specified variable. The value of the field 44 is evaluated to decide, if serialization is enabled and takes place or not, see the details later with reference to figure 6. In case more than one variable 44 are used joint by a respective logical condition as mentioned further above, then said table 50 stores preferably all said relevant variable values.

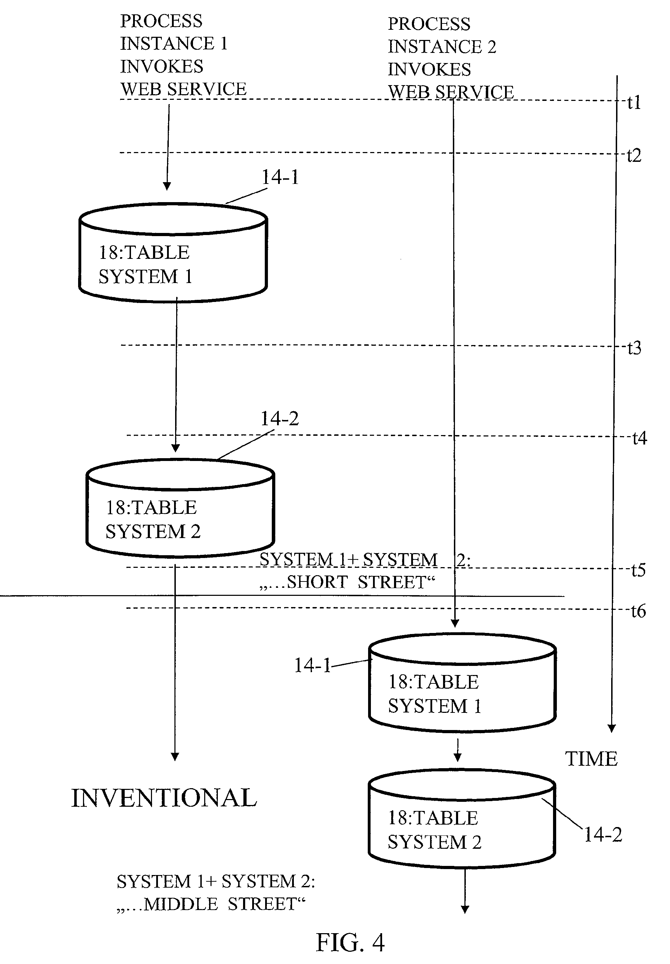

With further reference to figures 4 and 6 the control flow of the inventional method when implemented for serializing scopes, i.e., groups 40 of activities representing only parts of a process instance according to above example b) will be described next below. Serialization is assumed to be based on correlation sets (which is the same as input message variables). Serialization based on variables works exactly the same way except that serialization is done by the navigation engine and not by the correlation set manager.

Figure 4 shows a process consisting of two activities that invoke Web Services (not depicted) which perform an update of system 1 and an update of system 2 in a respective dataset 18, which in turn comprises redundant information, e.g. business information like a customer address, etc.

The correlation manager component 24 performs all essential control for avoiding data inconsistencies in an intended database update process for both systems 14-1 and 14-2 by serializing the execution of the two process instances.

In a step 610 and under use of standard techniques the correlation manager 24 obtains the next incoming message from the wait queue 26.

In a next step 630 the correlation manager performs a look up of the status table 50 and determines whether any active process instance with the same set of values 44 is currently executing 635. If no such concurrent process instance is found, a new entry is inserted into the status table with the values of the correlation sets and an appropriate status, see step 640. This update has the effect of serializing the execution of business process instances with the same correlation set values.

Then the navigation manager processes the appropriate activities which access the appropriate databases 14-1, and 14-2, step 650, where the update is performed as mentioned further above. After completion of the process instance, the navigation manager deletes the appropriate entry in the correlation manager's status table, step 660.

With reference back to decision 635, if such an entry in the status table is found, this means that such a process instance is currently being carried out, then the YES-branch to step 670 is followed. In this case, the correlation manager 24 suspends the processing of the message until the currently running process instance has completed the appropriate processing. This is done by putting the message, or a handle to it into the wait queue 26.

A similar processing is being carried out in the case the serialization is only performed for a scope. In this case, the status table contains additional information about which scope is currently processed.

Further modifications of the inventional methods are disclosed as follows:

The criteria, which define coincidence, may be defined including any other logical expression (AND OR, >, <, etc.) which can be evaluated by a WFMS.

Instead of a status table 50 any other structure can be used; it should however, enable for a quick access to the fields to be compared. Furthermore it is not required that the table 50 is maintained in persistent storage. In particular, in the case of serialization by variable, the status table is preferably held in main memory.

It should be appreciated by a person skilled in the art that some or even all of the proposed changes to prior art disclosed in here can be implemented without an external specification by just making the proposed processing the default behaviour of the workflow management system that supports BPEL4WS.

The present invention can be realized in hardware, software, or a combination of hardware and software. A serialization tool according to the present invention can be realized in a centralized fashion in one computer system, or in a distributed fashion where different elements are spread across several interconnected computer systems, or simply as an Add-in within prior art programs. Any kind of computer system or other apparatus adapted for carrying out the methods described herein is suited. A typical combination of hardware and software could be a general purpose computer system with a computer program that, when being loaded and executed, controls the computer system such that it carries out the methods described herein.

The present invention can also be embedded in a computer program product, which comprises all the features enabling the implementation of the methods described herein, and which - when loaded in a computer system - is able to carry out these methods.
Computer program means or computer program in the present context mean any expression, in any language, code or notation, of a set of instructions intended to cause a system having an information processing capability to perform a particular function either directly or after either or both of the following
a) conversion to another language, code or notation;
b) reproduction in a different material form.

## Claims

1. A method for serializing the execution of process instances wherein said method is to be performed by a workflow management system (10) (WFMS) in a networked computer environment which implements the execution of multiple instances of business processes of the same process model accessing at least two datastores (14) holding redundant information, **characterized by**
a) identifying at least one variable of the process model, b) managing (640) for each process instance the current value of said preselected variable (44) and the ID (42) of the respective process instance,
c) determining (630) if a new process instance specifies a value which is already maintained for a currently active process instance,
d) and if one active process instance is found, halting (670) the execution of the new process instance until said already active process instance has completed (660).

2. A method for serializing the execution of process instances wherein said method is to be performed by a workflow management system (10) (WFMS) in a networked computer environment which implements the execution of multiple instances of business processes of the same process model accessing at least two datastores (14) holding redundant information, **characterized by**
a) identifying at least one input message field of a message consumed by the process model
b) maintaining (640) for each process instance the current value of said input message field (44) and the ID (42) of the respective process instance,
c) determining (630) if an incoming message triggering the execution of a process instance specifies a value which is already maintained for a currently executed process instance,
d) and if one active process instance is found, halting (670) the processing of the incoming message until said already active process instance has completed (660).

3. The method according to claim 2 where the input message fields are described by correlation sets.

4. The method according to claim 1 or 2, wherein the serialization is performed for a part of the business process.

5. The method according to claim 1 or claim 2, wherein a process instance is enabled to invoke Web Services (12) which may perform an update process (650) of said information (18), wherein step c) is performed by looking up (610) an incoming web message.

6. The method according to claim 1 or claim 2, wherein only a part of a process instance is halted.

7. The method according to claim 1 or claim 2, wherein in step a) a set of variables is processed wherein the variables are joint in a logical expression.

8. A computer system in a networked computer environment for serializing the execution of process instances wherein said system comprises a workflow management system (10) (WFMS) which implements the execution of multiple instances of business processes accessing datastores (14-1, 14-2) holding redundant information, **characterized by** comprising a status table means (50) comprising at least one correlation set variable field (44) for tracking the progress of a process instance when accessing at least one of said two datastores (14-1, 14-2).

9. A computer system in a networked computer environment for serializing the execution of process instances wherein said system comprises a workflow management system (10) (WFMS) which implements the execution of multiple instances of business processes accessing said datastores (14-1, 14-2) holding redundant information, **characterized by** comprising, a status table means (50) comprising at least one correlation variable field for tracking the progress of a process instance when accessing at least one of said two datastores (14-1, 14-2).

10. A computer program for execution in a data processing system comprising software code portions for performing a method according to anyone of the preceding claims 1 to 7 when said computer program is run on said computer.

11. A computer program product stored on a computer usable medium comprising computer readable program means for causing a computer to perform the method of anyone of the claims 1 to 7, when said computer program product is executed on a computer.
